# EUROPÄISCHE PATENTSCHRIFT

(11) **EP 0 759 120 B1**
(45) Veröffentlichungstag und Bekanntmachung des Hinweises auf die Patenterteilung: **03.12.1997**
(21) Anmeldenummer: 95920807.5
(22) Anmeldetag: 09.05.1995
(51) Int. Cl.: F01N 7/10, B21D 26/02

(54) **ABGASKRÜMMER FÜR EINEN MEHRZYLINDERMOTOR**
EXHAUST MANIFOLD FOR A MULTI-CYLINDER INTERNAL COMBUSTION ENGINE
COLLECTEUR D'ECHAPPEMENT POUR MOTEUR A COMBUSTION INTERNE MULTI-CYLINDRE

(30) Priorität: 11.05.1994 DE 9407812 U
(43) Veröffentlichungstag der Anmeldung: 26.02.1997
(73) Patentinhaber: ZEUNA-STÄRKER GMBH & CO KG, D-86016 Augsburg (DE)
(72) Erfinder: BÖHM, Alfons, D-86405 Meitingen (DE); GRESCHER, Bernhard, D-86850 Fischach (DE); SANTIAGO, Enrique, D-86420 Diedorf (DE)
(74) Vertreter: Grättinger & Partner (GbR)
(86) Internationale Anmeldenummer: EP9501749
(87) Internationale Veröffentlichungsnummer: WO9531635

(56) Entgegenhaltungen:
- EP-A- 0 192 995
- EP-A- 0 623 739
- US-A- 4 864 978
- PATENT ABSTRACTS OF JAPAN vol. 13 no. 55 (M-795) ,8.Februar 1989 & JP,A,63 260632 (KATSUTERU ARAKI) 27.Oktober 1988,
- PATENT ABSTRACTS OF JAPAN vol. 10 no. 261 (M-514) ,5.September 1986 & JP,A,61 086029 (NISSAN MOTOR) 1.Mai 1986,
- PATENT ABSTRACTS OF JAPAN vol. 13 no. 76 (M-800) ,21.Februar 1989 & JP,A,63 273525 (KOKAN KAKO) 10.November 1988,
- PATENT ABSTRACTS OF JAPAN vol. 12 no. 61 (M-671) ,24.Februar 1988 & JP,A,62 206216 (SANGO KK) 10.September 1987,
- Bleche Rohre Profile, 35. Jahrgang (1988), Seiten 175 bis 180.
- Hydrostatic Forming of Tubes, 57 Automation 10, (1963.06), Seiten 84, 85;

## Beschreibung

Die vorliegende Erfindung betrifft einen Abgaskrümmer für einen Mehrzylindermotor, der das Abgas mehrerer Zylinder zu einem gemeinsamen Auslaß zusammenführt und schweißnahtfrei ausgeführt ist, indem er aus einem Rohrstück mit mindestens einer in der Seitenwand des Rohrstücks ausgebildeten Aushalsung gebildet ist.

Ein derartiger Abgaskrümmer ist in der japanischen Patentanmeldung 62-206216 offenbart. Bei diesem bekannten Abgaskrümmer sind in der Seitenwand eines geraden Rohrstücks zwei Aushalsungen ausgebildet, welche, nachdem sie mit einer Öffnung versehen worden sind, als Abgaseinlässe des Abgaskrümmers dienen. Als Auslaß des Abgaskrümmers dient eines der beiden offenen Enden.

Bei diesem Abgaskrümmer erweist sich als nachteilig, daß er nur zur Zusammenfassung des Abgases benachbarter Zylinder geeignet ist. Ungeeignet ist er beispielsweise zur Zusammenfassung der Abgase der Zylinder 1 und 4 eines Vierzylinder-Reihenmotors, wie dies bei Hochleistungsmotoren zur Leistungssteigerung erwünscht ist; denn ein das Abgas der Zylinder 2 und 3 zusammenfassender zweiter Abgaskrümmer könnte nicht montiert werden.

Es sind darüberhinaus in unterschiedlichster Weise ausgebildete weitere Rohrzusammenführungen bekannt. So beschreibt das deutsche Gebrauchsmuster 9100867 eine Rohrzusammenführung, bei der zwei endseitig einseitig abgeflachte, aneinander anliegende Rohrabschnitte in ein größeres Rohr eingesetzt sind. Bei der aus der europäischen Patentanmeldung 192995 bekannten Rohrzusammenführung weist ein Hauptrohr einen Einschnitt auf, in welchen das entsprechend ausgeformte Ende eines weiteren Rohrabschnittes mündet; der Rohrabschnitt wird mit dem Hauptrohr durch Schweißung verbunden. In der deutschen Offenlegungsschrift 4228372 ist eine Rohrzusammenführung beschrieben, bei welcher ein Rohrabschnitt endseitig in eine in einen Rohrbogen mechanisch eingebrachte Aushalsung eingesetzt ist. Bei allen drei bekannten Rohrzusammenführungen ist es von Nachteil, daß sie aus zwei oder drei Einzelteilen zusammengefügt sind. Dies führt zu beträchtlichen Herstellungskosten. Diese sind nicht zuletzt auch deshalb sehr hoch, weil die miteinander zu verbindenden Teile exakt zueinander passen und bezüglich einander ausgerichtet sein müssen, damit ausreichende mechanische Festigkeit und Dichtheit der Rohrzusammenführung gewährleistet ist.

Bei im Motorsport bekannten, als Rohrzusammenführung ausgebildeten Abgaskrümmern wird in die Außenwand eines vorgebogenen Rohres, in der Regel mit Laserschneidern, ein Loch geschnitten, in das ein entsprechend angepaßtes Rohr eingeschweißt wird. Derartigen Rohrzusammenführungen haften dieselben Nachteile an wie vorstehend beschrieben.

Auch aus zwei Halbschalen hergestellte Rohrzusammenführungen sind infolge der langen, die beiden Halbschalen miteinander verbindenden Schweißnähte teuer in der Herstellung.

Eine weitere Rohrzusammenführung ist in der deutschen Patentschrift 4103083 beschrieben. Diese bekannte Rohrzusammenführung geht aus einem Rohrstück hervor, das hydrostatisch umgeformt, insbesondere aufgeweitet, und anschließend bereichsweise durch Eindrücken in ein Doppelrohr umgewandelt worden ist. Bei dieser bekannten Rohrzusammenführung ist es von Nachteil, daß die Anordnung der beiden Einlässe nicht frei wählbar ist; die beiden Einlässe sind vielmehr stets eng zueinander benachbart.

In dem Artikel "Hydrostatic forming of tubing produces complex parts" (57 Automation 10 (1963.06), S. 84/85) wird im Zusammenhang mit unterschiedlichen Hohlkörpern das Verfahren der hydrostatischen Umformung erläutert, wobei auch die Ausformung einer Aushalsung in der Wand eines gebogenen Rohrstückes dargestellt ist.

Der vorliegenden Erfindung liegt die Aufgabe zugrunde, einen leichten, stabilen, einfach und kostengünstig herzustellenden Abgaskrümmer der eingangs genannten Art zu schaffen, bei dem die Anordnung der mindestens zwei Einlässe zueinander nahezu beliebig wählbar ist. Hintergrund für diese Aufgabenstellung sind insbesondere die häufig beengten Einbauverhältnisse für als Rohrzusammenführung ausgebildete Abgaskrümmer bei Verbrennungsmotoren.

Gemäß der vorliegenden Erfindung ist diese Aufgabenstellung gelöst durch einen Abgaskrümmer für einen Mehrzylindermotor, der das Abgas mehrerer Zylinder zu einem gemeinsamen Auslaß zusammenführt und schweißnahtfrei ausgeführt ist, indem er aus einem Rohrstück mit mindestens einer in der Seitenwand des Rohrstücks ausgebildeten Aushalsung gebildet ist, wobei das Rohrstück derart gebogen ist, daß seine beiden Enden als Einlässe dienen, wobei die Aushalsung als gemeinsamer Auslaß dient. Der Abgaskrümmer gemäß der vorliegenden Erfindung besteht somit aus einem einzigen Bauteil. Ein kostenaufwendiges Zusammenfügen von mehreren Bauteilen ist zur Herstellung des erfindungsgemäßen Abgaskrümmers nicht erforderlich. Dieser weist demgemäß auch keinerlei Schweißnähte oder dergleichen auf. Er ist demzufolge absolut dicht; und eine Schwächung des Materials durch Schweißnähte findet nicht statt. Der Abgaskrümmer nach der Erfindung kann somit auch aus einem Material hergestellt werden, daß für Schweißung schlecht oder gar nicht geeignet ist. Darüber hinaus können die beiden durch die Enden des Rohrstücks gebildeten Einlässe durch entsprechendes Biegen des Rohrstücks eine nahezu beliebige Anordnung bezüglich einander besitzen. Indem die beiden Einlässe beliebig zueinander angeordnet sein können, gestattet die Erfindung insbesondere die Bereitstellung eines kostengünstigen, leichten Abgaskrümmers, mit welchem das Abgas der weit voneinander entfernt angeordneten Zylinder 1 und 4 eines Vierzylinder-Reihenmotors zusammengefaßt wird. Zur Herstellung eines erfindungsgemäßen Abgaskrümmers mit drei oder mehr Einlässen werden die über die durch die Enden des Rohrstücks gebildeten beiden Einlässe hinausgehenden zweckmäßigerweise durch in der Seitenwand des Rohrstücks ausgeformte Aushalsungen gebildet.

Die Abgasanlage eines Vierzylindermotors kann zwei erfindungsgemäße Abgaskrümmer umfassen, die jeweils zwei Zylinder miteinander verbinden - bei einem Reihenmotor die Zylinder 1 und 4 bzw. 2 und 3. Es ist jedoch auch eine Kombination eines Krümmers nach der Erfindung für die Zylinder 1 und 4 mit einem herkömmlich aufgebauten für die Zylinder 2 und 3 denkbar.

Im Sinne der vorliegenden Anmeldung werden unter "Rohr" bzw. "Rohrabschnitt" nicht nur solche mit kreisrundem Querschnitt verstanden. Auch Rohre bzw. Rohrabschnitte mit anderen Querschnitten (z.B. rechteckig, oval, polygonal) sind im Rahmen der Erfindung einsetzbar. Darüberhinaus ist nicht ausgeschlossen, daß sich der Querschnitt über die Länge des Rohrstückes verändert (z.B. erweitert, verengt, stellenweise einschnürt).

Zur Herstellung des erfindungsgemäßen Abgaskrümmers wird die später als Auslaß dienende Aushalsung zweckmäßigerweise durch das Verfahren der Innenhochdruckverformung (IHV) in das Rohrstück eingebracht. Besonders bevorzugt ist es dabei, wenn das Rohrstück vor dem Ausformen der Aushalsung so gebogen ist, daß seine beiden später als Einlaß dienenden Enden ihre im wesentlichen endgültige Stellung bezüglich einander besitzen und auch der Verlauf des Rohrstücks zwischen den beiden späteren Einlässen und dem späteren Auslaß bereits dem endgültigen Verlauf entspricht. Ein solchermaßen vorgebogenes Rohrstück wird dann für die Innenhochdruckverformung in ein Gesenk eingelegt, dessen Gravur eine erste Aussparung zur Aufnahme des vorgebogenen Rohrstückes sowie eine in diese erste Aussparung mündende zweite Aussparung aufweist. Bei der Innenhochdruckverformung wird das Rohrstück zur Ausbildung des Auslasses in die zweite Aussparung hinein verformt. Zweckmäßig ist es dabei, wenn die Ausbildung der Aushalsung in die zweite Aussparung des Gesenks hinein durch einen Gegenstempel kontrolliert abläuft. Der Gegenstempel weicht dabei bei fortschreitender Ausbildung der Aushalsung in der zweiten Aussparung definiert zurück. Auf diese Weise wird eine allzu rasche Ausformung der Aushalsung mit entsprechend starker Verringerung der Wandstärke verhindert. Vielmehr erfolgt die Ausbildung der Aushalsung infolge der definierten Gegenkraft des Gegenstempels so langsam, daß das Rohrstück von einem oder von beiden Enden her nachgeführt werden kann. Für die entsprechende Stauchung des Rohrstücks während der Innenhochdruckverformung ist mindestens ein in der ersten Aussparung verschiebbarer Axialstempel vorgesehen, der auf das zugeordnete Ende des Rohrabschnitts eine Axialkraft ausübt, so daß Material in den Verformungsbereich der Aushalsung nachfließt.

Zur Herstellung weiterer, als weitere Einlässe dienender Aushalsungen kann im Gesenk eine entsprechende Anzahl weiterer in die erste Aussparung mündender dritter Aussparung vorgesehen sein.

Eine zur Herstellung des erfindungsmäßen Abgaskrümmers geeignete Vorrichtung weist die folgenden Merkmale auf:
- Ein Gesenk weist eine Gravur auf mit einer ersten Aussparung auf zur Aufnahme eines Rohrstückes und einer in die erste Aussparung mündenden zweiten Aussparung;
- in der ersten Aussparung sind zwei Axialstempel vorgesehen, von denen mindestens einer eine Leitungsbohrung aufweist zur Zufuhr eines Druckmediums in das Innere des in die erste Aussparung eingelegten Rohrstückes;
- in der zweiten Aussparung ist ein Gegenstempel verschiebbar geführt.

Ein wesentliches Merkmal dieser Vorrichtung ist somit der in der zweiten Aussparung vorgesehene Gegenstempel, der in der oben beschriebenen und weiter unten näher erläuterten Weise für eine kontrollierte Ausbildung der Aushalsung während der Innenhochdruckverformung sorgt. Das Gesenk besteht aus zwei oder mehr Teilformen, je nach der endgültigen Form der Rohrzusammenführung.

Das Ausweichen des Gegenstempels bei zunehmender Ausformung der Aushalsung kann gegen die Kraft eines Federelements erfolgen. Auch kommt ein über eine entsprechende Einrichtung gesteuertes Zurückziehen des Gegenstempels in Abhängigkeit von der Zeit oder dem im Inneren des Rohrstückes herrschenden Druck in Betracht.

Zweckmäßigerweise ist mindestens einer der beiden Axialstempel der beschriebenen Vorrichtung während der Innenhochdruckverformung in der ersten Aussparung des Gesenks verschiebbar geführt, damit das zugeordnete Ende des Rohrstückes während der Innenhochdruckverformung entsprechend der Ausbildung der Aushalsung nachgeführt werden kann. Auf jenen verschiebbaren Axialstempel wirkt dabei eine Nachführeinrichtung. Diese kann beispielsweise weggesteuert sein; dies bedeutet, daß in fester Abhängigkeit von dem in dem Rohrstück herrschenden Druck der Axialstempel um einen vorgegebenen Weg nachgeführt wird. Ferner kommt auch eine Kraftsteuerung in Betracht, bei der abhängig von dem in dem Rohrstück herrschenden Druck auf den Axialstempel eine definierte, das Rohrstück stauchende Kraft aufgebracht wird. Zur Verschiebung des Axialstempels kann darüber hinaus eine kombinierte Kraft-Weg-Steuerung vorgesehen sein. Schließlich ist es auch möglich, als Eingangsgröße für die Steuerung der Nachführung des Axialstempels den Ausweichweg des Gegenstempels oder die auf ihn wirkende Kraft zu verwenden. Auch kann die auf einen Stempel wirkende Kraft in Abhängigkeit von dem Verschiebeweg eines beliebigen (anderen) Stempels gesteuert werden; und zwar gilt dies sowohl für einen oder beide Axialstempel als auch für den Gegenstempel bzw. die Gegenstempel im Falle von mehreren Aushalsungen. Eine Steuerung des bzw. der verschiebbaren Stempel(s) ist jedoch nicht zwingend.

Um die Verschiebebewegung des Gegenstempels in dem Gesenk zu ermöglichen, weist die zweite Aussparung bevorzugt einen zylindrischen Abschnitt auf, in welchem der Gegenstempel geführt ist. Entsprechendes gilt für die erste Aussparung, wenn einer oder beide Axialstempel verschiebbar sein sollen, um das zugeordnete Ende des Rohrstückes während der Innenhochdruckverformung nachschieben zu können.

Im folgenden wird die Erfindung anhand der Zeichnung näher erläutert. Es zeigen
Fig. 1 bis 4 verschiedene Stufen bei der Herstellung eines Ausführungsbeispiels des erfindungsgemäßen Abgaskrümmers und
Fig. 5 einen Schnitt durch eine zur Herstellung des erfindungsgemäßen Abgaskrümmers geeignete Vorrichtung.

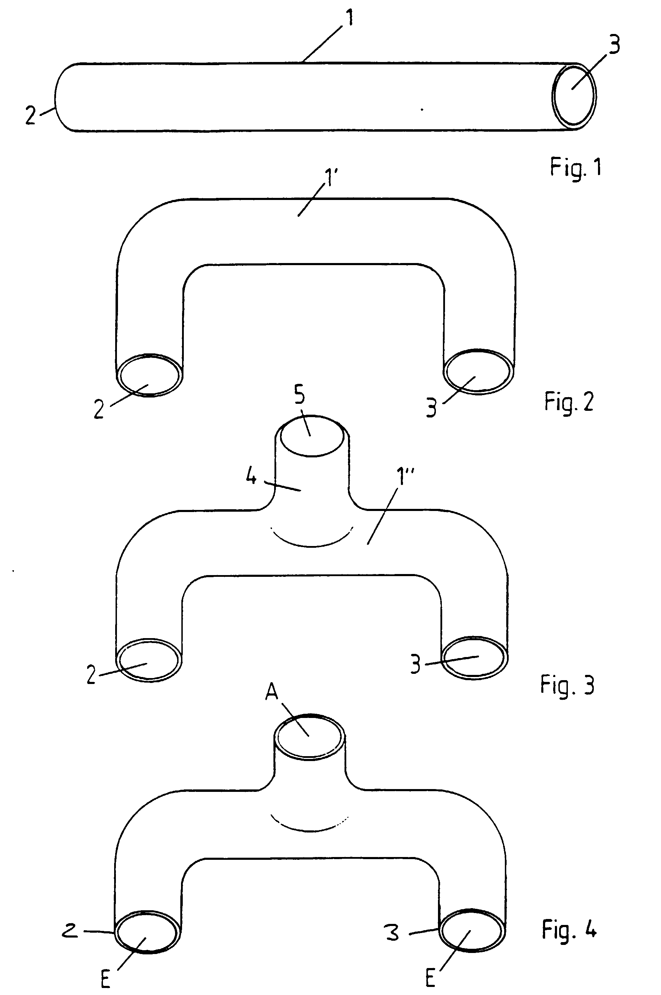

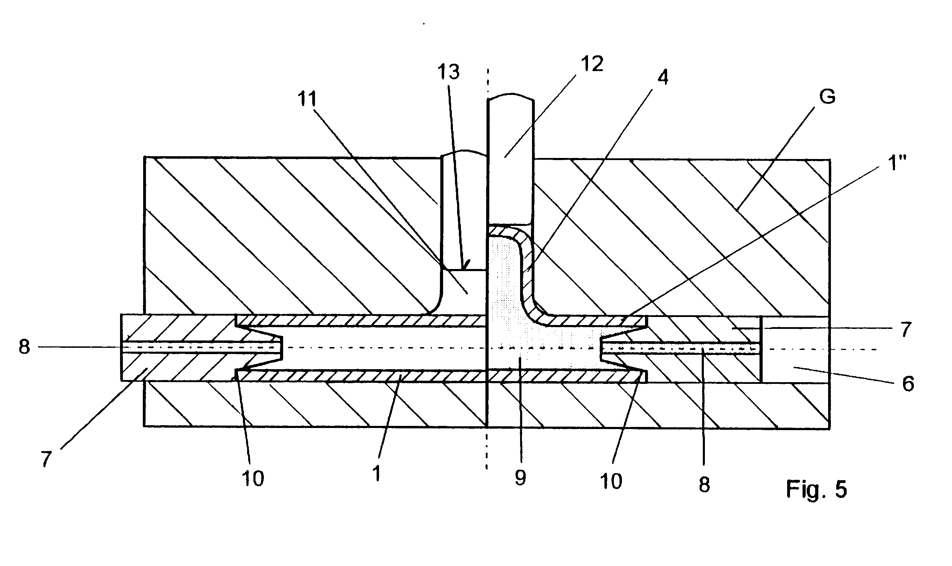

Als Ausgangsmaterial für die Herstellung des Abgaskrümmers (Fig. 4) dient ein Rohrstück 1 (Fig. 1). In einer als solches bekannten Biegevorrichtung wird das Rohrstück 1 so gebogen, daß seine beiden Enden 2, 3, welche die Einlässe E der fertigen Rohrzusammenführung (Fig. 4) bilden sollen, ihre nahezu endgültige Lage bezüglich einander einnehmen. Auch der Verlauf des Rohrstücks zwischen den beiden Enden entspricht bei dem vorgebogenen Rohrstück 1' (Fig. 2) im wesentlichen dem endgültigen Verlauf.

Das vorgebogene Rohrstück 1' wird nun in das Gesenk einer Vorrichtung eingelegt, in welcher die Aushalsung 4 (Fig. 3) in der Seitenwand des vorgebogenen Rohrabschnittes 1' ausgebildet wird. Hierzu besitzt das Gesenk eine Gravur mit einer ersten Aussparung, die der Form des vorgebogenen Rohrstücks 1' angepaßt ist, und einer zweiten Aussparung, in welche hinein die Aushalsung 4 ausgeformt werden soll. Zur Ausbildung der Aushalsung wird das vorgebogene Rohrstück 1' mittels des Verfahrens der Innenhochdruckverformung umgeformt. Hierzu wird in als solches bekannter Weise in das Innere des Rohrstücks ein Druckmedium eingebracht. Bei zunehmendem Druck im Inneren des Rohrstückes verformt sich dieses im Bereich der zweiten Aussparung des Gesenks unter Ausbildung der Aushalsung 4.

Nachdem das Rohrstück 1" (Fig. 3) nach Abschluß der Innenhochdruckverformung dem Gesenk entnommen wurde, wird die "Kappe" 5 der Aushalsung 4 abgetrennt, so daß der Auslaß A (Fig. 4) der fertigen Rohrzusammenführung entsteht. Je nach der weiteren Verwendung können nach Abschluß der Umformung die Einlässe E und der Auslaß A der Rohrzusammenführung mit Flanschen bestückt werden.

Fig. 5 veranschaulicht das Gesenk G einer Vorrichtung, in welcher die Innenhochdruckverformung eines Rohrstückes zur Ausbildung einer Aushalsung stattfindet. In der linken Hälfte der Fig. 5 ist die Vorrichtung vor Beginn der Umformung des Rohrstücks gezeigt, in der rechten Hälfte hingegen am Ende der Umformung.

Das in Fig. 5 dargestellte Gesenk dient der Umformung eines geraden, nicht vorgebogenen Rohrstückes 1. Dementsprechend ist die erste Aussparung 6 gerade ausgebildet. In ihr sind zwei Axialstempel 7 in deren Längsrichtung verschiebbar geführt. Sie besitzen jeweils eine Bohrung 8, von denen eine der Zufuhr eines Druckmediums 9 in das Innere des Rohrstücks 1 und das andere der gleichzeitigen Entlüftung dient. Die Axialstempel 7 schließen durch eine entsprechend ausgebildete Dichtfläche 10 dicht mit den zugeordneten Enden des Rohrstücks 1 ab.

In die erste Aussparung 6 mündet die zweite Aussparung 11. In dieser ist der Gegenstempel 12 verschiebbar geführt. Auf den Gegenstempel 12 wirkt dabei ein nicht dargestelltes - Federelement, welches den Gegenstempel in Richtung auf das in die erste Aussparung 6 eingelegte Rohrstück 1 vorspannt.

Wird das Druckmedium 9 im Inneren des Rohrstückes 1 unter ausreichend hohen Druck gesetzt, verformt sich die Außenwand des Rohrstücks 1 in die zweite Aussparung 11 hinein, so daß sich dort die Aushalsung 4 bildet. Wenn die Verformung des Rohrstückes so weit fortgeschritten ist, daß die Wand des Rohrstücks 1 an der Stirnfläche 13 des Gegenstempels 12 anliegt, wird der Gegenstempel 12 bei fortgesetzter Umformung entgegen der Kraft der auf ihn wirkenden Feder verschoben. Mit anderen Worten, die während der Innenhochdruckverformung sich stetig vergrößernde Aushalsung 4 schiebt den Gegenstempel 12 vor sich her. Durch die auf den Gegenstempel wirkende Gegenkraft wird dabei erreicht, daß sich die Umformung langsam vollzieht; es kann somit infolge der Nachführung der Axialstempel 7 ausreichend Material in den Verformungsbereich nachfließen. Die Nachführung der Axialstempel 7 erfolgt durch eine gesonderte - nicht dargestellte-Nachführeinrichtung. Durch diese wird auf beide Axialstempel in Abhängigkeit von dem Druck des Druckmediums 9 eine definierte Nachführkraft aufgebracht.

## Patentansprüche

1. Abgaskrümmer für einen Mehrzylindermotor, der das Abgas mehrerer Zylinder zu einem gemeinsamen Auslaß (A) zusammenführt und schweißnahtfrei ausgeführt ist, indem er aus einem Rohrstück (1, 1') mit mindestens einer in der Seitenwand des Rohrstücks ausgebildeten Aushalsung (4) gebildet ist,
dadurch gekennzeichnet,
daß das Rohrstück (1, 1') derart gebogen ist, daß seine beiden Enden (2, 3) als Einlässe (E) dienen, wobei die Aushalsung (4) als gemeinsamer Auslaß (A) dient.

## Claims

1. Exhaust gas manifold for a multicylinder engine, which guides together the exhaust gas of a plurality of cylinders to one common outlet (A) and is formed in such a manner so as to be free of weld seams, in that it is formed from one pipe piece (1, 1') having at least one neck (4) formed in the lateral wall of the pipe piece, characterised in that the pipe piece (1, 1') is curved in such a manner that its two ends (2, 3) serve as inlets (E), wherein the neck (4) serves as a common outlet (A).

## Revendications

1. Collecteur de gaz d'échappement pour un moteur polycylindrique qui concentre les gaz d'échappement de plusieurs cylindres pour les amener à une sortie commune et qui est conformé sans soudure en ce sens qu'il est formé à partir d'un tuyau (1, 1') avec au moins un col (4) conformé dans la paroi latérale du tuyau, caractérisé en ce que le tuyau (1, 1') est cintré de telle manière que ses deux extrémités (2, 3) servent d'entrées (E), le col (4) servant de sortie (A) commune.
